(19) Europäisches Patentamt
European Patent Office
Office européen des brevets

(11) **EP 2 435 822 B1**

(12) **EUROPEAN PATENT SPECIFICATION**

(45) Date of publication and mention
of the grant of the patent:
**27.06.2018 Bulletin 2018/26**

(21) Application number: **09845325.1**

(22) Date of filing: **01.07.2009**

(51) Int Cl.:
***G01N 27/90*** (2006.01)

(86) International application number:
**PCT/UA2009/000029**

(87) International publication number:
**WO 2010/138093 (02.12.2010 Gazette 2010/48)**

(54) **SCANNER BASED ON AN INDUCTOR OF EDDY CURRENTS FOR MAGNETIC TAPE TESTING**

SCANNER BASIEREND AUF EINEN WIRBELSTROMINDUKTOR ZUR MAGNETBANDPRÜFUNG

SCANNER BASÉ SUR UN INDUCTEUR DE COURANTS DE FOUCAULT POUR UN TEST DE BANDE MAGNÉTIQUE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.05.2009 UA 2009005393**

(43) Date of publication of application:
**04.04.2012 Bulletin 2012/14**

(73) Proprietors:
• **Lievyi, Sergii**
 **Kiev 02002 (UA)**
• **Agalidi, Yuriy**
 **Kiev 03114 (UA)**
• **Shumsky, Ivan**
 **Minsk 220113 (BY)**

(72) Inventors:
• **Lievyi, Sergii**
 **Kiev 02002 (UA)**
• **Agalidi, Yuriy**
 **Kiev 03114 (UA)**
• **Shumsky, Ivan**
 **Minsk 220113 (BY)**

(74) Representative: **Benatov, Samuil Gabriel**
 **Dr. EMIL BENATOV & PARTNERS**
 **6, Asen Peykov Str.**
 **1113 Sofia (BG)**

(56) References cited:
**RU-C1- 2 044 312      RU-C1- 2 063 025**
**SU-A1- 836 576      SU-A1- 945 770**
**SU-A1- 1 608 567      US-A- 4 706 020**
**US-A- 5 648 720**

## Description

*Field of the Invention*

The invention relates to structure of inductors and scanners for magnetic tape testing of articles made from electroconductive (especially, nonferromagnetic) materials and for documenting of information concerning defects located in surface layers of said articles using flexible magnetic carrier (in particular, magnetic tape).

The inductors and the scanners according to the invention can be used:

  for forensic investigations of traces of mechanical injuries of machine components (especially if they are concealed at least partially by dielectric protective and/or decorative coatings or dielectric impurities), for evaluation of authenticity of sculptured identification marks on marked vehicles' components or of assay marks on jewelry and bars of bank metals, and for detection of traces of elimination or alteration of aforesaid or other marks by mechanical treatment, welding, brazing, soldering or etching-out etc., and

  for nondestructive quality testing of preferably thin-layer details in engineering industry (especially, in aircraft building and rocket production, in production of nuclear reactors' details and in other cases when results of first and each next testing of details must be saved for evaluation of wear and remaining life of theirs).

Respectively, the term «*defect*» refers hereinafter to any alteration of surface geometry and to any non-uniformity of chemical composition and/or structure of surface layers of arbitrary electroconductive articles, which are occurred -

as a result of accidents (e.g., in the form of scratches, dents, cracks, inclusions of extraneous particles etc.) or premeditated mechanical and/or chemical injuries, and

as a result of breakdowns in processes of production of articles or of natural wear-and-tear of theirs (e.g., in the form of micro-cracks or micro-cavities).

*Background Art*

It is well known that magnetic tape testing includes following steps:

  fixation of a flexible magnetic information-carrying medium (usually a piece of a magnetic tape) onto surface of a studied electroconductive article,

  magnetizing of this article together with the magnetic tape,

  recording of detected signals onto the magnetic tape owing to action of magnetic leakage field within the studied article,

  removal of the recorded magnetic tape from the article's surface, and

  reading of obtained record in order to evaluate occurrence of defects and their geometrical forms, dimensions and location.

If electroconductive articles, which are used as objects of magnetic tape testing, are made from ferromagnetic materials, they can be magnetized by application of an external constant or slowly variable magnetic field [see e.g.:

1. Приборы для неразрушающего контроля материалов и изделий / Справочник под редакцией В.В. Клюева. - М.: Машиностроение, , 1976, с. 56-63 (In English: Devices for nondestructive testing of materials and articles/Handbook edited by V.V. Kluyev, Moscow, Publishing House "Mashinostroyeniye", 1976, pp. 56-63); 2. ГОСТ 25225-82. Контроль неразрушающий. Швы сварных соединений трубопроводов. Магнитографический метод (In English: State Standard of the USSR GOST 25225-82. Nondestructive testing. Pipeline's welded junctions. Magnetographic method); 3. Jack Blitz. Electrical and magnetic methods of nondestructive testing. CRC Press, 1991, pp. 65-67; 4. US 3,534,258, and other].

Obtained records can be either read using usual magnetic heads or Hall transducers, or visualized using usual magnetic powder or magneto-optical means based on Kerr effect or Faraday effect (see SU 697905; JP 58461 of 04.1983; US 4,625,167; US 4,695,796; US 4,755,752; RU 2159426; RU 2165079 and other).

Unfortunately, the described process and above-mentioned means for its realization are unsuitable for magnetic tape testing of nonferromagnetic electroconductive articles, in which any magnetic field can be excited and supported only as a result of electric currents.

US 5,754,044 discloses a method for contact excitation of current (and, respectively, magnetic leakage fields) within nonferromagnetic electroconductive articles. Thereto a suitable (preferably pulse) current source must be connected by contacting electrodes to the opposite parts of studied article, a maximally powerful discharge current must be generated, and then distortions of induced magnetic field, which are caused by defects located on discharge current track, may be recorded on a magnet carrier (in particular, on a magnet rubber).

However, it is impossible to select universal current source that could be suitable for magnetic tape testing of nonferromagnetic articles because they have substantially different geometrical forms, dimensions, masses and electroconductivity. Moreover, even if pulse current source will be used for contact excitation of currents (and induced magnetic leakage fields) within any studied article, dielectric coating or accidental dielectric impurities on the article's surface will practically exclude magnetic recording of information regarding defects.

Therefore magnetic tape testing of such articles is preferably based on use of combination of pulse current sources and inductors of eddy currents. So, the paper of G.L. Fitzpatrick et al. «Magneto-optic/Eddy Current Imaging of Aging Aircraft: a New NDI Technique» discloses a device for magnetooptic visualization of defects (see MATERIAL EVALUATION, Dec. 1993, pp. 1402-1407.). This device comprises of:

a connected to the source of pulse current a contactless inductor of eddy currents shaped as an electroconductive plate, which is located, in operating position, above and near surface of a studied nonferromagnetic electroconductive article,
a magnetooptic converter, which has geometrical form and dimensions relevant to the inductor and is located, in operating position, above said inductor, and
a photodetector (in particular, a means for video-recording) of obtained images for the purpose of their documenting and/or analysis.

The plate-shaped inductor is capable to withstand powerful pulse currents without significant heating. Thus, it is especially useful for investigation of large-dimension nonferromagnetic details. In particular, it is known practical use of said Inductor for detection of flaws and spots of deep corrosion in aircraft details (see Y. Fan, Y. Deng, Z. Zeng, L. Udpa, W. Shih, G. Fitzpatrick, Aging Aircraft Rivet Site Inspection Using Magneto-Optic Imaging: Automation and Realtime Image Processing, Presented at 9th Joint FAA/DoD/NASA Aging Aircraft Conference, March 6-9, 2006, Atlanta).

However, adaptation of the plate-shaped inductor (and, moreover, of the magnetooptic converter) to the different geometrical forms of surfaces of studied articles is very difficult. Respectively, sensitivity of the magnetooptic converter to the defects (and reliability of magnetic testing) will decrease as much as deviation of the inductor and the magnetooptic converter from equidistance relative to the studied article's surface will increase.

Thus, such inductor of eddy currents, which has a thin and small (especially, wire) exciting conductor, and such scanner, which has built-in exciting conductor and is relocatable along surface of any studied article, are preferable for magnetic tape testing of different articles made from electroconductive (and, as a rule, nonferromagnetic) materials.

The nearest analogues of such inductor and such scanner are known from US 5,648,720 (Apparatus and method for producing a magnetic image of a conductive pattern using eddy currents).

The known inductor of eddy currents (named originally as "recording head structure") comprises of:

a supporting element in the form of a dielectric ferrite plate having a ring-like slot,
an exciting conductor in the form of at least one coil of thin (i.e. having diameter no more than 0.25 mm) wire located in said slot of the supporting element, and
a suitable means for connection of said wire coil to a selected pulse current source.

A scanner based on the described inductor comprises of a suitable holder of the inductor, this inductor as such, and a source of pulse current. In operating position the scanner is assembled kinematically with a suitable drive for movement of it along the studied article's surface, on which a magnetic tape piece is superposed.

The ferrite supporting element is usually located in operating position so that the symmetry plane of said ring-like slot is practically perpendicular to the studied article's surface. This permits to generate eddy currents within electroconductive article's parts during each discharge pulse and to record on the magnetic tape data concerning superposition of external magnetic field about said inductor's coil and magnetic leakage fields, which show places of anomalous electrical resistance determined by defects within the studied article. Stepwise movement of the scanner respective to the studied article forms a magnetogram as copy of a set of magnetic leakage fields induced by eddy currents.

As it is clear from the title of said invention, known inductor and scanner are meant for testing of integrity of thin-layer printed electric conductors. However, sensitivity of the scanner to the defects and resolving capacity of magnetic tape testing are limited substantially because combination of the ferrite supporting element and the exciting conductor in the form of the wire coil increase active resistance and, especially, inductive reactance of the inductor to the exciting pulse current. Moreover, the ferrite supporting element abridges itself a main part of induced magnetic fields. These extremely undesirable effects depress the response of the induced magnetic leakage fields for possible defects within surface layer of each studied electroconductive (and, especially, nonferromagnetic and/or having dielectric coating) article.

*Summary of the Invention*

The invention is based on the problem to create - by change of material and by modification of geometrical form of components - such inductor of eddy currents and such scanner based thereon, which are capable to substantially increase sensitivity to surface defects of any articles made from electroconductive preferably nonferromagnetic materials and resolving capacity of magnetic tape testing using eddy currents.

Said problem is solved in that a scanner for magnetic tape testing *according to the invention* comprises:

a rigid body;
an inductor of eddy currents, which is rigidly assembled with said body and comprises a nonferromagnetic dielectric supporting element having a longitudinal groove in the operational butt end and an exciting conductor that is shaped as wire segment and placed within said groove of said supporting element,
a source of pulse current mounted on said body, and
a suitable means for connection of said conductor of said inductor of eddy currents to said source of pulse current.

Such scanner has heightened sensitivity to the surface and sub-surface defects in electroconductive (especially nonferromagnetic) articles and secures high resolving capacity of magnetic tape testing owing to the explained above technical advantages.

Such inductor of eddy currents is substantially differed from the nearest analogue (see anew US 5,648,720). In fact, the proposed dielectric supporting element is made from nonferromagnetic material (instead ferrite), and the exciting conductor is shaped as initially rectilinear wire segment rested upon the bottom of said groove (instead at least one submerged into ferrite wire coil). These new characteristic features provide substantial decrease of active resistance and, especially, inductive reactance of the inductor to the exciting pulse current, and avoidance of closure of any magnetic flux by the dielectric supporting element. Accordingly, the response of the induced magnetic fields for possible defects within surface layer of each studied electroconductive article increases substantially. Significant increase of sensitivity to the defects and resolving capacity of magnetic tape testing is natural result of aforesaid technical advantages.

First additional feature consists in that the nonferromagnetic dielectric supporting element is formed as a one-piece plate, and the exciting conductor is rested upon the bottom of said groove through a bearing spacer made from elastic dielectric material.

Second additional feature consists in that the nonferromagnetic dielectric supporting element is formed as a one-piece plate made from spring polymeric material.

Any of said two features permits to adapt to such surface irregularities of studied articles, which are comparable with diameter of the exciting conductor.

Third additional feature consists in that said conductor is flexible, and said supporting element is formed as a chamber, in which at least only lower wall serves as elastic bearing spacer and which is filled, in operating position, with resilient fluid medium.. This permits to adapt to such surface irregularities of studied articles, which can be significantly more than diameter of the exciting conductor.

Fourth additional feature consists in that said conductor is flexible, and said supporting element comprises of at least three mounted in a row slidable segments, each of which is equipped with a proper spring bearing located oppositely to the operational butt end of the supporting element. This provide mutually independent reciprocal displacement of such segments and adjacent to these segments parts of the exciting conductor in case of scanning of intricate (especially stepped) profile.

Fifth additional feature consists in that said spring bearings are compression springs, each of which is equipped with a proper adjuster of compression force. This permits to adapt the inductor of eddy currents to magnetic tape testing of articles having previously known one-type pattern.

Sixth additional feature consists in that the source of pulse current is equipped with a circuit of excitation of eddy currents that comprises of:

an input excitation voltage transducer having a power input equipped with suitable means for connection to an external or to a built-in source of power supply, a power switch and a power output;
an excitation voltage regulator, which has a power input connected to the power output of said voltage transducer, a control input, a control output and a power output, and which is equipped with a setting device of excitation voltage that is connected to the mentioned control input;
a clock pulse generator, which has a control input connected to the control output of the excitation voltage regulator and a control output;
a programmable controller of pulse duration and pulse period, which has a control input connected to the control output of said clock pulse generator, a power input connected to the power output of said excitation voltage regulator, and which is equipped with a setting device of pulse duration and pulse period that is connected to the mentioned control input;

at least single-stage amplifier of output pulse current, which has a first control input connected with the control output of said programmable controller and second control input, a power input connected with the power output of the excitation voltage regulator and a power output meant for connection of the exciting conductor of the inductor of eddy currents, and which is equipped with a setting device of rate of pulse rise that is connected to the mentioned second control input.

The scanner equipped with above described excitation circuit of pulse eddy currents can be made from available components and used preferably for in-line quality check of one-type electroconductive articles in manufacturing environments.

Seventh additional feature consists in that the amplifier of output pulse current has two amplifier stages and is composed of a preamplifier and a final amplifier, which are connected in-parallel to the power output of the excitation voltage regulator and in series to the control output of said programmable controller of pulse duration and pulse period, at that the exciting conductor of the inductor of eddy currents is connected to the power output of the final amplifier. This permits additional increasing of sensitivity of the magnetic tape to the surface defects of electroconductive articles and to provide effective magnetic tape testing of various nonferromagnetic articles.

Eighth additional feature consists in that the said source of pulse current is equipped additionally with a programmer that is connected, for the purpose of power supply, to the power output of the excitation voltage regulator and, for the purpose of adjustment, to the said programmable controller of pulse duration and pulse period. This permits to readjust the scanner for magnetic tape testing of articles made from arbitrary electroconductive materials and to regulate sensitivity to various defects.

Ninth additional feature consists in that the source of pulse current is equipped with diagnostic interface which is meant for inspection of running at least of the excitation voltage regulator and the programmable controller of pulse duration and pulse period. This is especially comfortable for reprogramming of the small-sized scanners which can move along the studied articles' surfaces by hand.

Tenth additional feature consists in that the source of pulse current is equipped with such circuit of active controllable magnetic biasing of the magnetic tape during recording, which comprises of:

a regulator of magnetic biasing voltage, which has a power input connected to the power output of the input excitation voltage transducer, a power output and a control input, and which is equipped with a setting device of magnetic biasing voltage that is connected to the mentioned control input, and

at least single-stage amplifier of magnetic biasing signal that is connected to the power output of said regulator of magnetic biasing voltage, to the said programmable controller for the purpose of control, and to the said exciting conductor of the inductor of eddy currents as additional current source.

This substantially increases sensitivity of the magnetic tape to the weak signals generated by insignificant defects.

*Brief Description of the Drawings*

The invention is further explained by a detailed description of the proposed inductor of eddy currents and the scanner with references to accompanying drawings, in which:

Fig.1 shows an exemplary assembly of the scanner having an inductor of eddy currents based on nonferromagnetic dielectric supporting element formed as a one-piece plate (axonometric view, where a frontal part of the dielectric supporting element is conditionally removed and a studied article's part and a laid onto said article magnetic tape's piece are shown additionally);

Fig.2 shows one of preferable structure of the inductor of eddy currents based on nonferromagnetic dielectric supporting element in the form of a chamber having an elastic lower wall (axonometric view, where a part of studied article and a piece of magnetic tape are additionally shown);

Fig.3 shows other preferable structure of the inductor of eddy currents based on nonferromagnetic dielectric supporting element in the form of a few mounted in a row slidable segments (axonometric view, where a part of studied article and a piece of magnetic tape are additionally shown);

Fig.4 shows an exemplary block diagram of the pulse current source meant for power supply of the inductor of eddy currents during magnetic tape testing;

Fig.5 shows the physical diagram of induction of eddy currents within a studied article;

Fig.6 shows the time diagrams of signals generated as a result of excitation of the inductor of eddy currents by unipolar rectangular voltage pulses;

Fig.7 shows the time diagrams of signals generated as a result of excitation of the inductor of eddy currents by saw-tooth voltage pulses;

Fig.8 shows the time diagrams of signals generated as a result of excitation of the inductor by bipolar rectangular voltage pulses;

Fig.9 shows the scaled-up photo of the magnalium test object having surface ferromagnetic inclusions;

Fig.10 shows the visualized magnetogram of the surface of the test object according to the Fig.9;

Fig.11 shows the scaled-up photo of the duralumin test object having a paint coating and perversions of marking concealed under this coating;

Fig.12 shows the visualized magnetogram of the surface of the test object according to the Fig.11 ;

Fig.13 shows the scaled-up photo of the duralumin test object having practically invisible surface cracks;

Fig.14 shows the visualized magnetogram of the surface of the test object according to the Fig.13.

*The best Embodiments of the Invention*

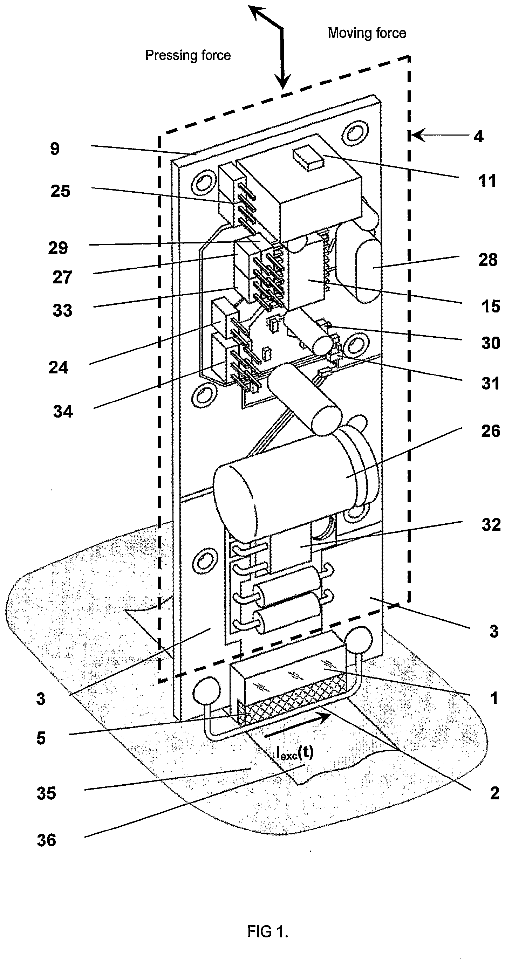

Each embodiment of a proposed inductor of eddy currents for magnetic tape testing (see Figs 1-3) comprises of:

a nonferromagnetic dielectric supporting element 1 having a no denoted especially longitudinal groove in the operational butt end,

a placed within said groove preferably flexible exciting conductor 2 (e.g., in the form of a segment of copper or other metal wire having diameter preferably in the range of 0.3 mm to 0.8 mm, or a strip twisted from at least two wire segments, which can have different diameters and chemical compositions, or a segment of other suitable flexible electrical conductor), and

a suitable means (e.g., conductor paths) 3 for connection of said conductor 2 to the source 4 of pulse current.

In the simplest case (see Fig.1), the nonferromagnetic dielectric supporting element 1 is formed as a one-piece plate, and the exciting conductor 2 is rested upon the bottom of said groove through a bearing spacer 5 made from elastic dielectric material.

The one-piece plate-shaped nonferromagnetic dielectric supporting element 1 can be made from electrical insulating ceramics (e.g., porcelain, steatite and the like), or from rigid thermoplastics (e.g., polypropylene, polycarbonate, kapron, shockproof copolymers based on styrene, and the like), or from a rigid composites based on thermosetting polymeric binders (e.g., textolite). The bearing spacer 5 can be made from soft resilient material (e.g., microporous rubber).

It is possible also (although it is not shown on drawings) use of said supporting element 1 shaped as one-piece plate, which is made from spring dielectric (in particular, polymeric) material. It is desirable for magnetic tape testing of such articles that have practically smooth contact surfaces.

In order to adapt to the rough surfaces of different studied articles it is desirable to use a flexible exciting conductor 2. In this case the nonferromagnetic dielectric supporting element 1 can be made:

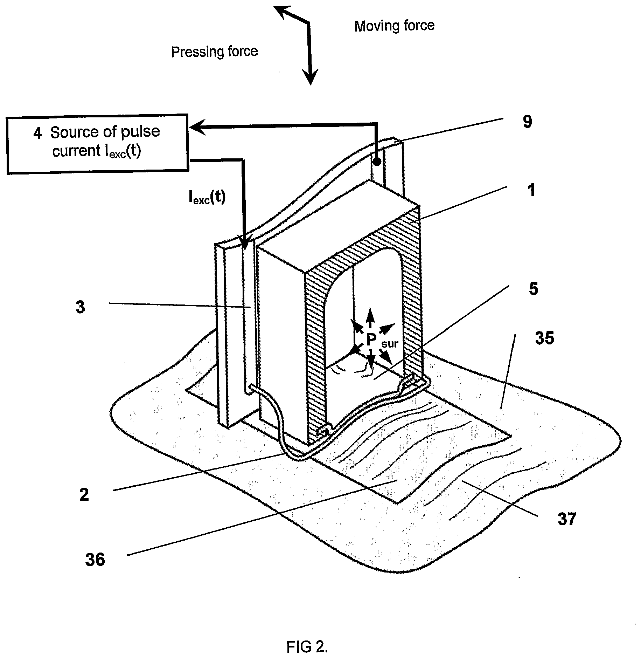

either in the form of a chamber, in which at least only lower wall serves as elastic bearing spacer 5 and which is filled, in operating position, with resilient (preferably gaseous) fluid medium, that is conditionally denoted by divergent arrows (see Fig.2);

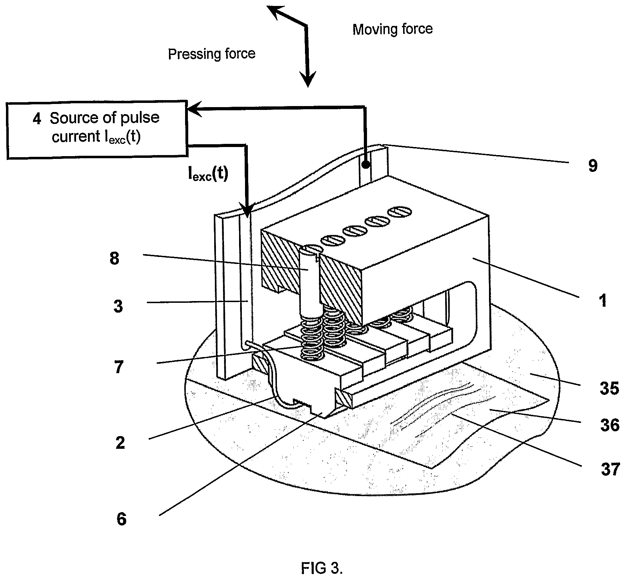

or in the form of at least three mounted in a row slidable segments 6, each of which is equipped with a proper spring bearing located oppositely to the operational butt end of this element 1. Each such bearing can be formed as a compression springs 7, which is equipped with a proper adjuster 8 of compression force, as it is shown on Fig.3.

The scanner for magnetic tape testing (see anew Fig.1) is usually based on a printed-circuit board having dielectric (e.g., textolite) body 9, to which the dielectric supporting element 1 carrying said conductor 2 is connected immediately, and on which basic units of described below the source 4 of pulse current are mounted. The means 3 for connection of said conductor 2 to the source 4 of pulse current are formed, as a rule, as broad symmetrically placed on the body 9 printed conductor paths having low (about milliohm) complex impedance that is selected up-to-date of complex impedance of said conductor 2.

The scanner can have an arbitrary not shown especially source of power supply, for example, usual external electrical network or, preferably, a built-in accumulator. Respectively, the source 4 of pulse current can have different structure that must correspond to output parameters of selected source of power supply and requirements to amplitude and time parameters of electrical signals of excitation of eddy currents within studied articles.

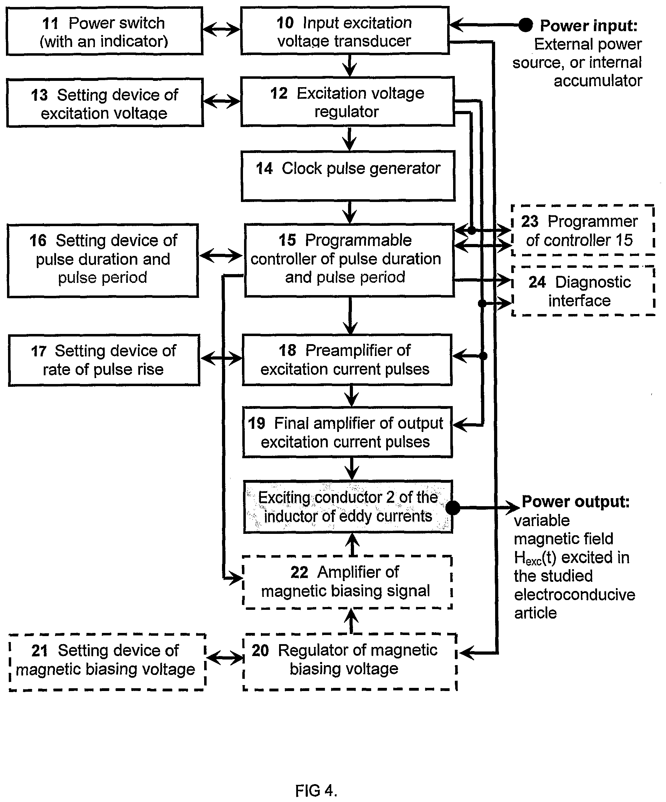

One of preferable examples of the structure of the source 4 of pulse current is shown on Fig.4. This structure has a circuit for excitation of pulse eddy currents and respective magnetic fields of variable intensity within a studied article. This circuit includes:

an input excitation voltage transducer 10 having a power input equipped with suitable means for connection to an external or to a built-in source of power supply, a power switch 11 equipped with no denoted especially (e.g., a LED) indicator of power supply and a power output;

an excitation voltage regulator 12, which has a power input connected to the power output of the input excitation voltage transducer 10, a control input, a control output and a power output, and which is equipped with a setting device 13 of excitation voltage that is connected to the mentioned control input;

a clock pulse generator 14, which has a control input connected to the control output of the excitation voltage regulator 12 and a control output;

a programmable controller 15 of pulse duration and pulse period, which has a control input connected to the control output of said clock pulse generator 14, a power input connected to the power output of said excitation voltage regulator 12 and a control output, and which is equipped with a setting device 16 of pulse duration and pulse period that is connected to the mentioned control input;

at least single-stage (but preferably two-stage) amplifier of output pulse current, which has a first control input connected with the control output of said programmable controller 15 and second control input, a power input connected to the power output of the excitation voltage regulator 12 and a power output and is equipped with a setting device 17 of rate of pulse rise (e.g., a trimmer potentiometer) that is connected to the said second control input, and to the power output of which the exciting conductor 2 of the inductor of eddy currents is connected.

*Ad notam*. It is clear for each person skilled in the art that all mentioned hereinafter inputs and outputs are denoted on the drawings by respective arrows.

The shown on Fig.4 exemplary two-stage amplifier of output pulse current is composed of a preamplifier 18 and a final amplifier 19, which are connected in-parallel to the power output of the excitation voltage regulator 12 and in series to the control output of said programmable controller 15 of pulse duration and pulse period, at that the exciting conductor 2 of the inductor of eddy currents is connected to the power output of the final amplifier 19.

In order to additional enhancement of sensitivity to the weak signals generated by insignificant defects, the structure of the source 4 of pulse current can include a circuit of active controllable magnetic biasing of the magnetic tape during recording. In the one of preferable embodiments of the invention (see anew Fig.4), this circuit includes:

a regulator 20 of magnetic biasing voltage, which has a power input connected to the power output of the input excitation voltage transducer 10, a power output and a control input, and which is equipped with a setting device 21 of magnetic biasing voltage that is connected to the mentioned control input, and

at least single-stage amplifier 22 of magnetic biasing signal that is connected to the power output of said regulator 20 of magnetic biasing voltage, to the said programmable controller 15, and, in order to work as additional current source independent from the final amplifier 19, to the said exciting conductor 2 of the inductor of eddy currents.

It is clear for each person skilled in the art, that one pair of suitable permanent magnets or electromagnets can be used also as additional means for magnetic biasing of the magnetic tape during recording of information about insignificant or relatively deeply located defects. Evidently (although it is not shown especially on the drawings), these (electro)magnets must be fixed onto the scanner's body 9 oppositely to the ends of the exciting conductor 2.

Subject to quantity of one-type magnetic tape tests, the programmable controller 15 of pulse duration and pulse period may be made either on the base of a suitable one-time-programmable microchip or in the form of an unit suitable to multiple reprogramming. In this case, the source 4 of pulse current must be equipped with a programmer 23 that is connected, for the purpose of power supply, to the power output of the excitation voltage regulator 12 and, for the purpose of adjustment, to the said programmable controller 15 of pulse duration and pulse period;

And, finally, the source 4 of pulse current can be equipped with diagnostic interface 24 meant for inspection of running at least of the excitation voltage regulator 12 and the programmable controller 15 of pulse duration and pulse period, and, optionally, of other units including, for example, the regulator 20 of magnetic biasing voltage (see Fig.4).

Hardware implementation of the described structure of the source 4 of pulse current is showed mainly on Fig.1. In particular, there are shown:

a connector 25 of the input excitation voltage transducer 10,

aforesaid power switch 11 (e.g., in the form of a tumbler) having no denoted especially a LED indicator of power supply;

a reservoir (in particular, suitable electrolytic) capacitor 26 of the excitation voltage regulator 12,

a connector 27 of the setting device 13 of excitation voltage;

a quartz oscillator 28 (having working frequency, for example 10 MHz) of the clock pulse generator 14;

aforesaid programmable controller 15 of pulse duration and pulse period (e.g., ATtini 2313-20SU microcontroller manufactured by *Atmel*) having a connector 29 meant for connection of the setting device 16 of pulse duration and pulse period;

transistors 30 and 31 (in particular, the transistors BSS-138 manufactured by *Fairchild Semiconductors* or BSS-84 manufactured by *Philips*), on which aforesaid preamplifier 18 are based, and a transistor 32 (in particular, the transistor IRF3205 manufactured by *International Rectifier*), which is base of aforesaid final amplifier 19 of output pulse current;

a connector 33 of aforesaid setting device 17 of rate of pulse rise;

a connector 34 of aforesaid programmer 23 and aforesaid diagnostic interface 24.

The scanner suitable for manual movement along the studied articles' surface was used in described below experiments. The inductor of eddy currents was equipped by the made from electrical copper round exciting conductor 2 having the diameter 0.8 mm, the full length 40 mm and the length of initially rectilinear operating part 25 mm. This conductor 2 was placed onto microporous rubber bearing spacer 5 in said groove of the supporting element 1 that was shaped as a one-piece textolite plate. Said scanner was equipped with a built-in power source in the form of an accumulator that provides operating voltage in the range of 10 to 18 V.

Anisotropic metallic magnetic tape, which is made from low-carbon (0.2%C) hard-magnetic alloy of iron, nickel, chromium and manganese, was used for recording of information concerning detected defects. This tape had such magnetic parameters:

| | |
|---|---|
| residual magnetic induction $B_r$ | no less than 800 Gs (0.08 T); |
| maximal residual magnetization $M_{r\,max}$ | about 64 kA/m; |
| coercive force $H_c$ | about 400 Oe (32 kA/m); |
| magnetization at saturation $H_s$ | about 80 kA/m. |

Pieces of such tape were used, as a rule, repeatedly. Moreover, even new tape, before its placing onto a studied article's surface, was treated for cancellation of traces of accidental magnetizing. Such cancellation can carry out either by full demagnetizing of magnetic tape, or its magnetizing up to saturation.

It is well known that demagnetizing may be fulfilled using variable magnetic field with decaying amplitude that must be acting in direction of the easy axis of re-magnetization. As a result of this procedure, residual magnetization of anisotropic magnetic tape reduces practically to zero.

It is well known also that magnetizing of the magnetic tape up to saturation in any (along- or towards-track) direction erases any (accidental or purposeful) previous record. The advantage of this procedure of preparation of the magnetic tape to use consists in that the residual magnetization facilitates recording of information about insignificant defects (and, therefore, excludes active magnetic biasing of such pre-sensibilized tape in many cases).

Therefore, the magnetic tape was usually magnetized up to saturation before its experimental use in towards-track direction of expectant movement of the scanner.

In general, the magnetic tape testing using described above the inductor of eddy currents and the scanner based thereon includes following steps.

An investigator lays a piece of prepared as described above magnetic tape 36 onto surface of a studied (usually nonferromagnetic or having a dielectric coating) article 35, as it is shown on Figs 1-3. Then he fixes said piece of magnetic tape 36 using not shown especially pieces of an adhesive tape and/or clamps or other suitable means.

If magnetic records of research results must be saved for a long term as independent documents, the new tape must be used. This tape must be cut into such pieces, each of which is sufficient for covering of all or selected part of the studied article's surface. If magnetic records can be visualized and obtained images can be documented using any suitable video-recording means, relevant existing pieces of the magnetic tape may be multiple used.

Then the scanner must be prepared for work. A minimal cycle of such preparation includes following steps (see Figs 1 and 4):

connection of the input excitation voltage transducer 10 (and, respectively) all other units connected to its power output) to above mentioned accumulator by the power switch 11,

adjustment of necessary voltage on the power output of the excitation voltage regulator 12 by the setting device 13 of excitation voltage,

adjustment of said programmable controller 15 of pulse duration and pulse period by said setting device 16 and reprogramming of this controller, if it will be necessary, by the programmer 23, and

adjustment of the amplifier of output pulse current (in particular, of the preamplifier 18) by the setting device 17 of rate of pulse rise.

If the scanner is equipped with diagnostic interface 24, these adjustments and specific settings may be inspected by suitable voltmeter and oscilloscope.

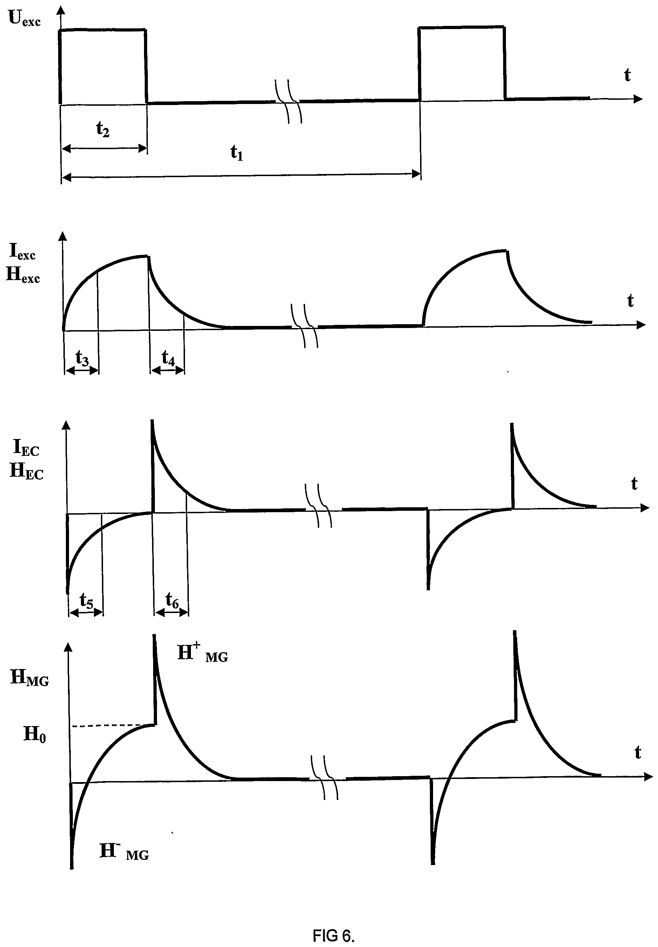

The amplifier (in particular, the final amplifier 19) of output pulse current, which is controlled by the clock pulse generator 14 and the programmable controller 15, generates voltage pulses having prescribed form, duration and period and supplies the exciting conductor 2 of the inductor of eddy currents through the conductor paths 3 (see Fig.1). Some examples of such voltage pulses are shown on the Figs 6-8 (see their upper parts).

In case of expected search of insignificant defects, above described preparation of the scanner for work may be supplemented with adjustment of the circuit of active controllable magnetic biasing of the magnetic tape 36 during recording. For this purpose, the regulator 20 of magnetic biasing voltage must be adjusted by the setting device 21. Then the investigator switches on the amplifier 22 of magnetic biasing signal, which additionally supplies the exciting conductor 2 of the inductor of eddy currents. At that the magnetic biasing signals are synchronized with the output signals of the final amplifier 19 because both said units are connected to the control output of said programmable controller 15.

The investigator places the prepared for work scanner in start position onto the initial part of the magnetic tape 36 and presses it to the studied article's 35 surface in order to ensure intimate contact even with sculptured elements 37 of said article (see Figs 2 and 3). Then he moves the scanner (by hand or by suitable drive) preferably uninterruptedly until the terminal part of the magnetic tape 36 would be attained.

If the scanner moves onto any convex upwards or concave downward sculptured element 37, the exciting conductor 2 plunges into the bearing spacer 5 or uplifts by said spacer 5 within aforesaid groove of the supporting element 1. These displacements of the exciting conductor 2 can be provided also as a result of reversible deformation of the bearing spacer 5 in the form of the lower part of aforesaid chamber-shaped supporting element 1 (see Fig.2), or owing to independent motion of the slidable segments 6 and respective shrinkage/expansion of the springs 7, compression forces of which are pre-determined by the adjusters 8 (see Fig.3).

Speed of the scanner movement must correspond to the condition of

$$t_1 \leq S_{scan}/V_{scan},$$

where -

$t_1$ - the pulse period of excitation/recording, second,
$S_{scan}$ - instantaneous recording length, and
$V_{scan}$ - linear velocity of scanning.

When magnetogram is recorded, the following steps must be fulfilled:

removal of the scanner from the studied article,
switching-off the input voltage transducer 10,
removal of the recorded magnetic tape 36 from the studied article 35, and transfer of said tape for following study (in particular, reading and analysis of detected defects).

The described above scanner was developed preferably for manual use. Thus, maximal linear velocity of scanning $V_{scan\,max}$ is no more than 50 mm/s at pulse-repetition frequency 1 kHz and each instantaneous recording length $S_{scan} \approx 50$ micrometers.

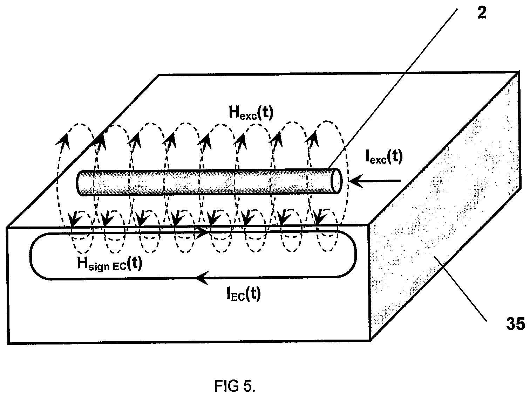

The physical diagram of induction of eddy currents within the studied article 35 (see Fig.5) shows evidently that, according to the Biot-Savart-Laplace law, each current pulse $I_{exc}(t)$, which is transmitted through the exciting conductor 2, generates in the its neighborhood a magnetic field of variable intensity $H_{exc}(t)$. This field, according to the Faraday law of electromagnetic induction, excites pulse eddy currents $I_{EC}(t)$ within surface layer of any electroconductive studied article 35. These currents $I_{EC}(t)$, according to the Lenz rule, are opposite in direction to the currents $I_{exc}(t)$ in the exciting conductor 2, when they increase, and are coincided in direction with said currents $I_{exc}(t)$, when they decrease.

It is obvious that actual trajectories of eddy currents $I_{EC}(t)$ within the studied article 35 and, respectively, the intensity $H_{EC}(t)$ of magnetic leakage fields induced by these currents, are depended on configuration of intensity $H_{exc}(t)$ of exciting magnetic field and on such differences of conductivity within surface layer of the studied article 35, which are determined by defects. It is clear also, that during scanning of the article's 35 surface the magnetic tape 36 is undergoing by resulting magnetic field of variable intensity $H_{MG}(t)$. This field is instantaneous superposition of magnetic field of variable intensity $H_{exc}(t)$ in the neighborhood of the exciting conductor 2 and magnetic field of variable intensity $H_{EC}(t)$ induced within surface layer of the studied article's 35 material.

It should be noted that into said superposition may be included also a magnetic field, which is determined:

either due to residual magnetization of the magnetic tape 36 owing to its magnetizing up to saturation during preparation to the magnetic tape testing,

or due to active controllable magnetic biasing of the magnetic tape 36 by the exciting conductor 2 that obtains additional magnetic biasing signals from the amplifier 22 (see anew Fig.4).

Typical examples of dependence of the intensity $H_{EC}(t)$ of mentioned magnetic leakage fields and the parameters of recorded signals $H_{MG}(t)$ on the parameters of the voltage pulses $U_{exc}(t)$, that excite said conductor 2, are illustrated by time diagrams on Figs 6-8.

The Fig.6 shows time diagrams of signals generated owing to excitation of the inductor of eddy currents by the simplest unipolar rectangular voltage pulses $U_{exc}(t)$, where -

$t_1$ and $t_2$ denote respectively the pulse period and the pulse duration of output rectangular voltage pulses $U_{exc}(t)$ generated by the final amplifier 19,

$t_3$ and $t_4$ denote respectively the pulse rise time and the pulse drop time of excitation pulse current $I_{exc}(t)$ in the exciting conductor 2 and variations of intensity $H_{exc}(t)$ of respective to them magnetic field in the neighborhood of said conductor 2,

$t_5$ denotes the duration of eddy currents $I_{EC}(t)$ pulse induced within the studied article 35 when the pulse $I_{exc}(t)$ rises and variation of intensity $H_{EC}(t)$ of respective to them magnetic field within article 35,

$t_6$ denotes the duration of eddy currents $I_{EC}(t)$ pulse induced within the studied article 35 when the pulse $I_{exc}(t)$ drops and variation of intensity $H_{EC}(t)$ of respective to them magnetic field within article 35.

Owing to self-induction, the excitation pulse current $I_{exc}(t)$ in the exciting conductor 2 and, respectively, the intensity $H_{exc}(t)$ of magnetic field in the neighborhood of said conductor 2 are varying exponentially; at that the pulse rise time $t_3$ and the pulse drop time $t_4$ of each current pulse $I_{exc}(t)$ will be the less, the less inductance and the more active resistance of the exciting conductor 2 and conductor paths 3, on which the proposed inductor of eddy currents is based.

Owing to mutual induction, the eddy currents $I_{EC}(t)$ induced within the studied article 35 and, respectively, the intensity $H_{EC}(t)$ of magnetic field induced within said article, will vary according to the rate of pulse rise and the rate of pulse drop of excitation current $I_{exc}(t)$ within the exciting conductor 2. In this example the rise and the drop of each such pulse of excitation current $I_{exc}(t)$ are varying exponentially. Thus, according to the Faraday law, form of each pulse of eddy current $I_{EC}(t)$ induced within the studied article 35 will vary exponentially too.

Respectively, practically equal the pulse rise time $t_3$ and the pulse drop time $t_4$ of exciting pulse current $I_{exc}(t)$ within the exciting conductor 2 determine the parameters $t_5$ and $t_6$ of the eddy currents $I_{EC}(t)$ pulse induced within the studied article 35 and the pulses of intensity $H_{EC}(t)$ of magnetic fields induced by these currents; at that in this case all said time intervals are practically equal (i.e. $t_3 \approx t_4 \approx t_5 = t_6$).

According to the mentioned above superposition principle, magnetic leakage fields, which are induced by current pulse $I_{exc}(t)$ around the exciting conductor 2 and by eddy currents $I_{EC}(t)$ within the article 35, generate in the magnetic tape's 36 plane such resulting magnetic field of intensity $H_{MG}(t)$ that must be recorded. However, it is clear that only $H_{EC}(t)$ component of intensity of this resulting magnetic field carries useful information about defects.

With the view of energy saving and decrease of heating of the exciting conductor 2, the pulse period $t_1$ of the rectangular voltage pulses $U_{exc}(t)$ must be substantially less than the pulse duration $t_2$. At that the same $t_1$ value must appropriate to the scanning parameters because excluding of information losses during its magnetic recording at nonstop movement of the scanner can ensure, if any pulse period $t_1$ is no more than ratio of the instantaneous recording length $S_{scan}$ to the linear velocity of scanning $V_{scan}$, viz $t_1 \leq S_{scan}/V_{scan}$.

It is desirable, if upper limit of the linear velocity of scanning $V_{scan\ max}$ is no more than 50 mm/s. This well conforms to exciting pulse repetition frequency $f_1 = 1/t_1 = 1$ kHz and instantaneous recording length $S_{scan} \approx 50$ micrometers.

At that value $t_2$ must be conformed with active resistance and inductive reactance of the inductor in order to ensure transient processes at the rise and at the drop of pulses of the excitation current $I_{exc}(t)$ within the exciting conductor 2.

In other words, the condition $t_2 \geq t_3 + t_4$ (or $t_2 \geq 2t_3$, because $t_3 \approx t_4$) must be fulfilled.

Under this condition, the scanner can effectively excite eddy currents $I_{EC}(t)$ by rectangular unipolar voltage pulses $U_{exc}(t)$, if $t_2 \approx 0.1$-$0.4$ microsecond.

In order to regulate a deep of eddy currents $I_{EC}(t)$ within surface layer of the studied articles 35 a frequency set in their amplitude spectrum must be changed.

It is clear for each person skilled in the art that increase of oscillation frequency of eddy currents $I_{EC}(t)$ causes thinning of such skin layer, in which surface defects can be detected. It is clear too that amplitude spectrum of eddy currents could be changed by regulation of the rate of pulse rise of excitation current $I_{exc}(t)$ within exciting conductor 2 ant that this rate subject to the pulse rise time $t_3$ and the pulse drop time $t_4$ in each $I_{exc}(t)$ current pulse. Review of time diagrams on Fig.6 shows that the above mentioned rate of pulse rise must increase when the values $t_3$ and $t_4$ are decreasing.

The minimal values $t_3$ and $t_4$ and, respectively, upper frequencies of eddy currents within the studied article 35 are limited by time constant of the RL-circuit of said inductor, which includes, fortunately, said conductor 2 and said conductor paths 3 only. If the values $t_3$ and $t_4$ (and, respectively, thickness of skin layer) must be increased for detection of sub-surface defects, it can be fulfilled by the setting device 17 of rate of pulse rise (see Fig.4).

With regard to the proposed scanner the pulse rise time and the pulse droop time of current pulses in the exciting conductor 2 are selected in the range $t_3 \approx t_4 \approx$ (0.05 - 0.2) microsecond. At that the exciting pulse current $I_{exc}(t)$ in said conductor 2 has amplitude in the range of 80 A to 110 A.

As it was mentioned above, parameters $t_5$ and $t_6$ of the $I_{EC}(t)$ eddy currents pulse, induced within the studied article 35 in answer to the rise and droop of the excitation current pulse $I_{exc}(t)$, have practically identical duration, as the pulse rise time and the pulse drop time of current pulses $I_{exc}(t)$ of the inductor, viz $t_3 \approx t_4 \approx t_5 \approx t_6 \approx \tau$.

It is known from the theory of signal propagation in electric circuits that spectral function is independent from of any short pulses' form and is practically constant up to frequency $\omega \leq 1/\tau$ or $f \leq 1/(2\pi\tau)$. Respectively, duration of the eddy currents $t_5 = t_6$ = 0.05 microsecond ensures frequency range up to 3 MHz. It is sufficient in order to excite within aluminum and based thereon alloys the skin layer having deep about 0.05 mm.

Study of $H_{MG}(t)$-function shows that it is sign-changing. Therefore the intensity of magnetic field during action of each pulse of exciting current $I_{exc}(t)$ varies from the value $H^-_{MG}$ to the value $H^+_{MG}$, and the intensity of resultant magnetic field contains a constant component $H_0$ conditioned by the magnetic leakage field around the exciting conductor 2. This permits making of two conclusions:

firstly, each magnetogram saves only the extremes $H^+_{MG}$ because their amplitude is above and they lag in comparison with the extremes $H^-_{MG}$;
secondly, said component $H_0$ of induced magnetic field intensity can be used during each magnetic tape testing as a such means of stabile magnetic tape 36 magnetic biasing, which no induces additional eddy currents.

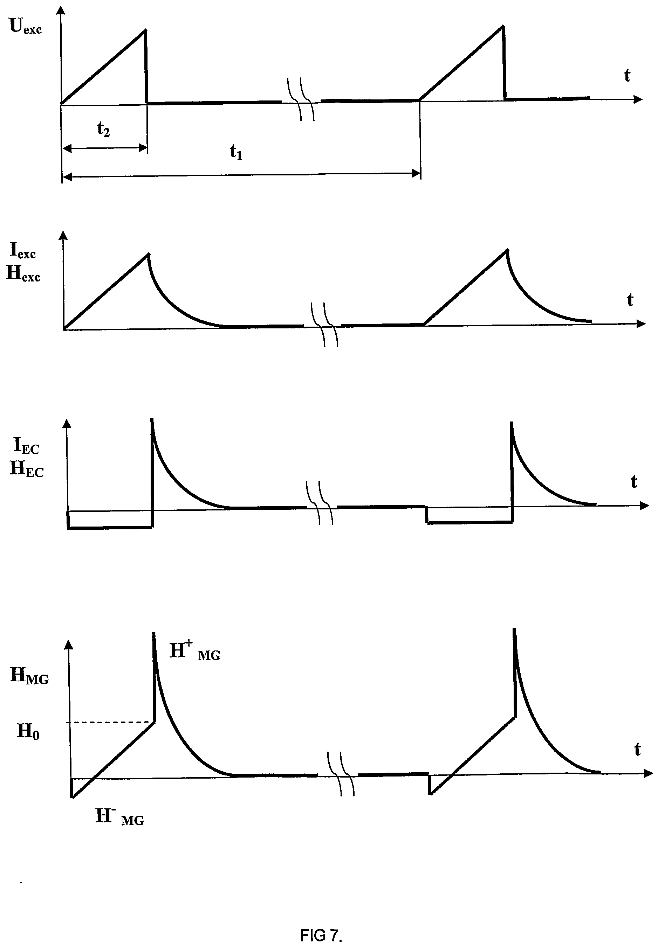

The Fig.7, where the time diagrams of signals generated using unipolar saw-tooth excitation voltage pulses $U_{exc}(t)$ are shown, demonstrates:

that addition of constant component or pulse component having low-angle fronts to excitation pulse current $I_{exc}(t)$ can provide stabile magnetic biasing of magnetic tape 36 during magnetic tape testing, and
that use of excitation current pulses $I_{exc}(t)$ having low-angle fronts ensures suppression of useless for magnetic tape testing extremes $H^-_{MG}$.

The possibility of combination of passive magnetic biasing of the magnetic tape 36 at its preparation to recording, of accompanying magnetic biasing under action of said component $H_0$ of the intensity of magnetic field induced by eddy currents and of above described active controllable magnetic biasing improves substantially operating characteristics of the scanner. In fact, any (and, moreover, combined) magnetic biasing of the magnetic tape 36 permits to effectively regulate recording level and to neutralize action of negative factors, such as dielectric coatings or impurities on studied articles 35 and variations of their electroconductivity or surface roughness, and to adapt the scanner to the dimensions of defects and to the material selected for magnetic recording.

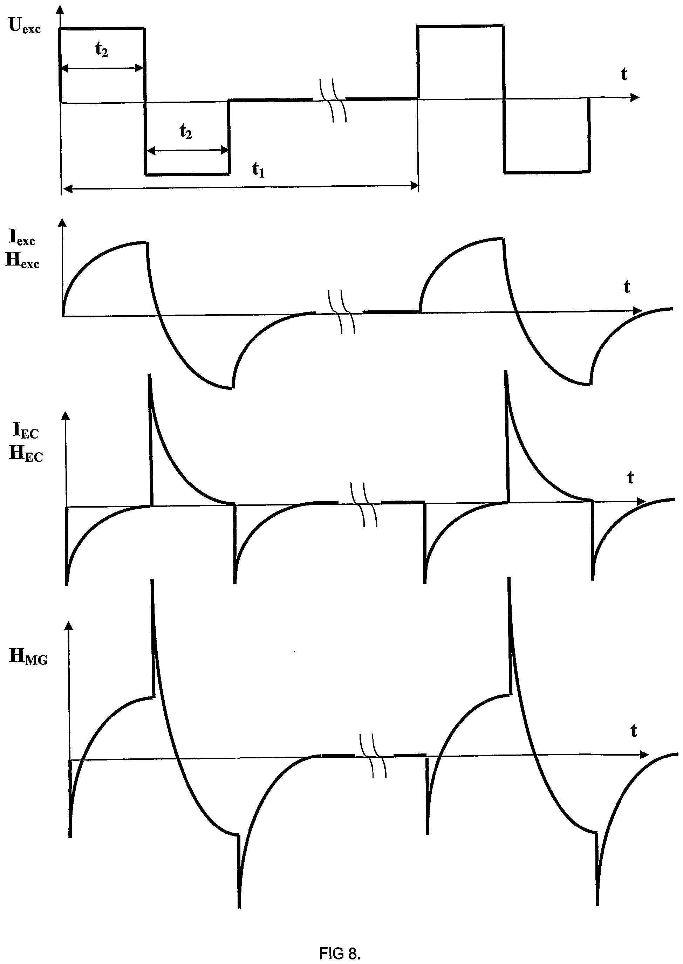

It is clear that other modes and parameters of excitation pulse are possible (and, sometimes, are preferably). For example, excitation of the conductor 2 of the inductor of eddy currents by bipolar rectangular voltage pulses (see Fig.8) can increase dynamic range of magnetic tape testing in cases, when linear velocity of scanning ensures recording of both extremes $H^+_{MG}$ and $H^-_{MG}$. This occasion permits more precise evaluation of positional relationship and dimensions of defects using machine tape reading (for example, by magnetic head) and following automatic treatment of obtained data using problem-oriented software.

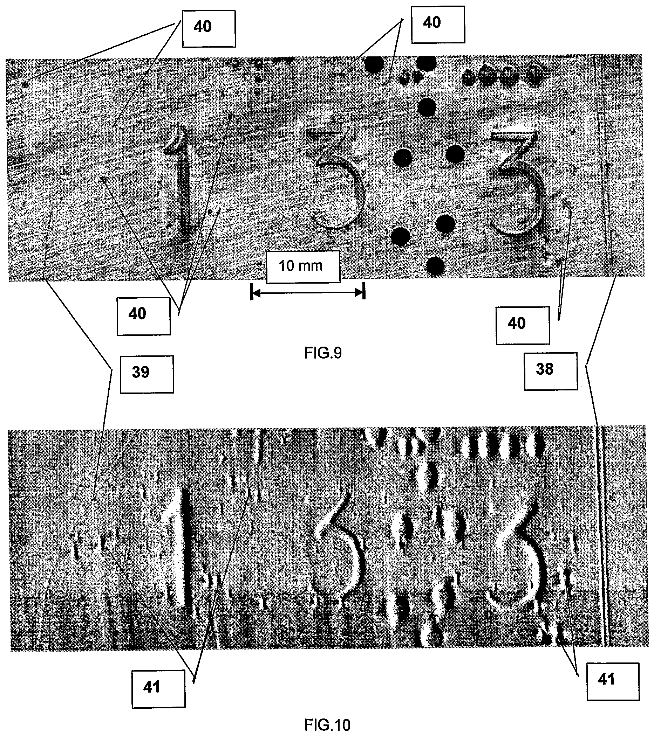

Efficiency of magnetic tape testing using the inductor and the scanner according to the invention is verified by many experiments, in which artificially prepared test objects were tested. Some obtained experimental data are shown on Figs 9-14.

So, Fig.9 shows the scanned with resolution 300 dpi scaled-up photo of the surface of the test object made in the form of magnalium plate having thickness 1 mm. This plate had artificially formed sculptured elements and defects, such as:

no denoted especially visible to the naked eye the holes having diameter 1,5 mm, the dents having diameter in the range of 0.4 to 1,2 mm and the sunken numeric mark «133»,
the parallel scratches 38 having width in the range of 200 to 300 micrometers, which are visible to the naked eye too,
the hardly observable on the plate's face scratch 39 having width 100 micrometers, and
the irregularly located insignificant surface defects 40 in the form of small grey spots, which are corresponded to the not perceivable visually shallow dents, dielectric impurities and clusters of ferromagnetic inclusions.

Said test object was tested using the above described inductor, scanner and magnetic tape, which was magnetized up to saturation before recording.

The source 4 of pulse current was tuned by setting device 13 of excitation voltage on the amplitude 16 V.

The unipolar rectangular voltage pulses having the period $t_1$=1 ms and the duration $t_2$=0.25 microsecond were used for generation of magnetogram.

The pulse rise time and the pulse droop time of current pulses in the exciting conductor 2 of the inductor of eddy currents were respectively $t_3 \approx t_4 \approx 0.1$ microsecond.

The record on the magnet tape was visualized by a thin-film magnetooptic converter based on *Bi*-comprising garnet ferrite that operates using Faraday effect.

All aforesaid sculptured elements of the test object's surface (including scratches 38 and 39) are evidently shown on the visualized magnetogram (see Fig.10). This vindicates sensitivity of the scanner to the surface scratches-type defects having width 100 micrometers and resolving capacity no less than 200 micrometers. Moreover, visualization of magnetogram allows detecting bright and contrasting clusters of ferromagnetic inclusions 41 from great number of insignificant surface defects 40.

Thus, Figs 9 and 10 show applicability of the inductor and the scanner according to the invention for forensic investigations and for nondestructive testing of surface layers of nonferromagnetic articles.

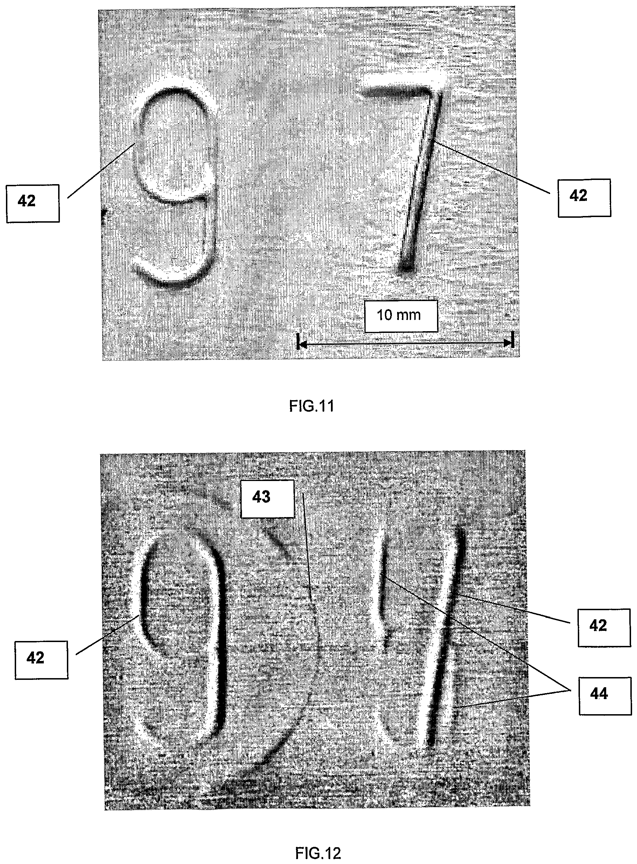

In particular, the scanned with resolution 300 dpi scaled-up photo of surface of the duralumin test object coated by anticorrosion paint having thickness in the range of 90 to 110 micrometers (see Fig.11) shows evidently the numerals «**9**» and «**7**» denoted as 42.

However, during preparation of said test object the initial numerals «**6**» and «**5**» were impressed on the duralumin plate. Then the circular fragment of said plate carrying the numeral «**6**» was punched-out, turned up 180° and pressurized into the same place, and initial relief of numeral «**5**» was masked by a layer of epoxy crack filler, on which the numeral «**7**» was impressed until condensation of epoxy resin. Finally the test object's surface was sanded up and entirely coated by the non-transparent layer of said anticorrosion paint.

The prepared thereby test object was tested using above described the inductor, the scanner and magnetic tape, which was magnetized up to saturation before recording.

The exciting conductor 2 of the inductor of eddy currents was excited by unipolar rectangular voltage pulses having the amplitude $U_{exc}$=17 V, the period $t_1$=1 ms and the duration $t_2$=0.3 microsecond.

The pulse rise time and the pulse droop time of excitation current $I_{exc}(t)$ in the inductor were $t_3 \approx t_4 \approx 0.1$ microsecond.

Visualized magnetogram of said test object's surface, which is shown on Fig.12, demonstrates clearly the configurations 42 of the relief of secondary marked numerals and, simultaneously, the significant line 43 divided two different metallic fragments (i.e. the boundary of punching-out/press-fitting) and the main part of configuration 44 of initially marked numeral «**5**».

The obtained results show applicability of the inductor and the scanner according to the invention for forensic investigations and for nondestructive testing of integrity of surface layers of any nonferromagnetic electroconductive articles without removal of dielectric protective and/or decorative coatings.

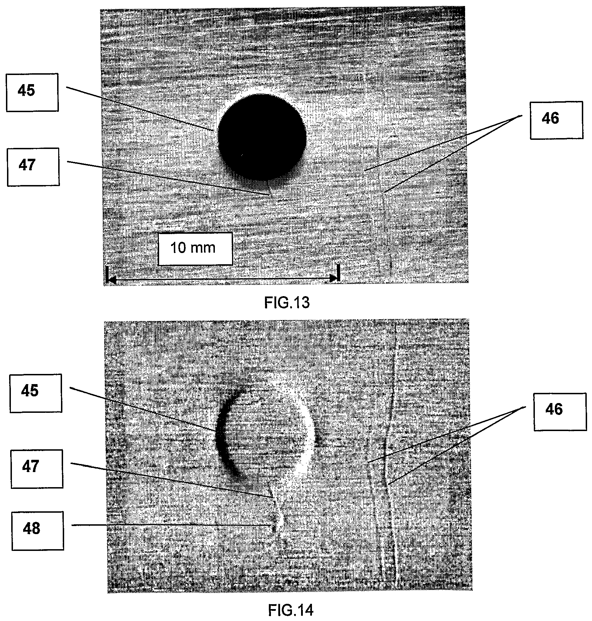

And, finally, Fig.13 shows the scanned with resolution 1200 dpi scaled-up photo of surface the test object in the form of duralumin plate having width 4 mm.

During preparation of said test object the through-hole 45 having diameter 5 mm and meant for stress concentration was perforated in said plate. Moreover, the practically invisible by naked eye scratches 46 having irregular breadth from 100 to 200 micrometers was inflicted. And finally said plate was bent and straightened several times near said through-hole 45. However, only experienced investigator can observe on the Fig.13 an image of a crack nucleus 47 that is sprung up owing to bending process.

The prepared thereby test object was tested using above described the inductor, the scanner and magnetic tape, which was demagnetized in full before recording.

The conductor 2 was excited by unipolar rectangular voltage pulses which had the amplitude $U_{exc}$=16 V, the pulse period $t_1$=1 ms and the pulse duration $t_2$=0.25 microsecond.

The pulse rise time and the pulse droop time of excitation current $I_{exc}(t)$ in the inductor were $t_3 \approx t_4 \approx 0.1$ microsecond. During experiment the exciting conductor 2 was receiving magnetic biasing signals from the amplifier 22 synchronously with said voltage pulses.

The scratches 46 are evidently developed and the hidden interior fatigue crack 48 as extension of said crack nucleus 47 is well apparent onto visualized magnetogram of the surface of said test object (see Fig.14).

Obtained results show applicability of the inductor and the scanner according to the invention for forensic investigations and for nondestructive testing of integrity of sub-surface layers of any nonferromagnetic electroconductive articles.

*Industrial applicability*

Present electrical industry can easy produce the proposed inductor of eddy currents and the scanner based thereon.

Further, said devices can be used for equipping of such systems, which are meant for magnetic tape testing of preferably nonferromagnetic electroconductive articles.

Moreover, such systems can be used for detection of arbitrary electroconductive inclusions into surface layers of dielectric articles.

**Claims**

1. A scanner for magnetic tape testing comprising:

    a rigid body (9);
    an inductor of eddy currents, which is rigidly assembled with said body (9) and comprises of a nonferromagnetic dielectric supporting element (1) having a longitudinal groove in the operational butt end and an exciting conductor (2) that is shaped as wire segment and placed within said groove of said supporting element (1);
    a source (4) of pulse current mounted on said body (9), and
    a suitable means (3) for connection of said conductor (2) of said inductor of eddy currents to said source (4) of pulse current.

2. The scanner for magnetic tape testing according to the claim 1, wherein said supporting element (1) is formed as a one-piece plate, and the exciting conductor (2) is rested upon the bottom of said groove through a bearing spacer (5) made from elastic dielectric material.

3. The scanner for magnetic tape testing according to the claim 1, wherein said supporting element (1) is formed as a one-piece plate made from spring polymeric material.

4. The scanner for magnetic tape testing according to the claim 1, wherein said conductor (2) is flexible, and said supporting element (1) is formed as a chamber, in which at least only lower wall serves as elastic bearing spacer (5) and which is filled, in operating position, with resilient fluid medium.

5. The scanner for magnetic tape testing according to the claim 1, wherein said conductor (2) is flexible, and said supporting element (1) comprises of at least three mounted in a row slidable segments (6), each of which is equipped with a proper spring bearing located oppositely to the operational butt end of the element (1).

6. The scanner for magnetic tape testing according to the claim 5, wherein said spring bearings are compression springs (7), each of which is equipped with a proper adjuster (8) of compression force.

7. The scanner for magnetic tape testing according to the claim 1, wherein said source (4) of pulse current is equipped with a circuit of excitation of eddy currents that comprises of:

    an input excitation voltage transducer (10) having a power input equipped with suitable means for connection to an external or to a built-in source of power supply, a power switch (11) and a power output;
    an excitation voltage regulator (12), which has a power input connected to the power output of the input excitation voltage transducer (10), a control input, a control output and a power output, and which is equipped with a setting device (13) of excitation voltage that is connected to the mentioned control input;
    a clock pulse generator (14), which has a control input connected to the control output of the excitation voltage regulator (12) and a control output;
    a programmable controller (15) of pulse duration and pulse period, which has a control input connected to the control output of said clock pulse generator (14), a power input connected to the power output of said excitation voltage regulator (12) and a control output, and which is equipped with a setting device (16) of pulse duration and pulse period that is connected to the mentioned control input;
    at least single-stage amplifier of output pulse current, which has a first control input connected with the control output of said programmable controller (15) and second control input, a power input connected with the power output of the excitation voltage regulator (12) and a power output meant for connection of the exciting conductor (2) of the inductor of eddy currents, and which is equipped with a setting device (17) of rate of pulse rise that is connected to the said second control input.

8. The scanner for magnetic tape testing according to the claim 7, wherein the amplifier of output current pulse has two amplifier stages and is composed of a preamplifier (18) and a final amplifier (19), which are connected in-parallel to the power output of the excitation voltage regulator (12) and in series to the control output of said programmable controller (15) of pulse duration and pulse period, at that the exciting conductor (2) of the inductor of eddy currents is connected to the power output of the final amplifier (19).

9. The scanner for magnetic tape testing according to the claim 7, wherein said source (4) of pulse current is equipped additionally with a programmer (23) that is connected, for the purpose of power supply, to the power output of the excitation voltage regulator (12) and, for the purpose of adjustment, to the said programmable controller (15) of pulse duration and pulse period.

10. The scanner for magnetic tape testing according to the claim 7, wherein said source (4) of pulse current is equipped with a diagnostic interface (24) meant for inspection of running at least of the excitation voltage regulator (12) and the programmable controller (15) of pulse duration and pulse period.

11. The scanner for magnetic tape testing according to the claim 7, wherein said source (4) of pulse current is equipped with such circuit of active controllable magnetic biasing of the magnetic tape during recording, which comprises of:

a regulator (20) of magnetic biasing voltage, which has a power input connected to the power output of the input excitation voltage transducer (10), a power output and a control input, and which is equipped with a setting device (21) of magnetic biasing voltage that is connected to the mentioned control input, and
at least single-stage amplifier (22) of magnetic biasing signal that is connected to the power output of said regulator (20) of magnetic biasing voltage, to the said programmable controller (15), and to the said exciting conductor (2) of the inductor of eddy currents as an additional current source.

**Patentansprüche**

1. Scanner zum Testen von Magnetbändern, umfassend:

ein starrer Körper (9);
einen Induktor für Wirbelströme, der fest mit dem Körper (9) verbunden ist und ein nichtferromagnetisches dielektrisches Stützelement (1) mit einer Längsnut in dem Arbeitsendstück und einem Erregungsleiter (2), der als Drahtsegment ausgebildet ist, und innerhalb der Nut des Stützelements (1) angeordnet ist;
eine Impulsstromquelle (4), die an dem Körper (9) angebracht ist, und
ein geeignetes Mittel (3) zum Verbinden des Leiters (2) des Induktors für Wirbelströme mit der Quelle (4) des Impulsstroms.

2. Scanner zum Testen von Magnetbändern nach Anspruch 1, wobei das Stützelement (1) als eine einteilige Platte ausgebildet ist und der Erregungsleiter (2) auf dem Boden der Nut durch einen Lagerabstandshalter (5) angebracht ist, der aus einem elastischen dielektrischen Material hergestellt ist.

3. Scanner zum Testen von Magnetbändern nach Anspruch 1, **dadurch gekennzeichnet, dass** das Stützelement (1) als einteilige Platte aus federelastischem Polymermaterial ausgebildet ist.

4. Scanner zum Testen von Magnetbändern nach Anspruch 1, **dadurch gekennzeichnet, dass** der Leiter (2) flexibel ist und das Stützelement (1) als Kammer ausgebildet ist, in der zumindest die untere Wand als elastischer Lagerabstandshalter (5) dient und die in Betriebsposition mit einem elastischen fluiden Medium gefüllt ist.

5. Scanner zum Testen von Magnetbändern nach Anspruch 1, wobei der Leiter (2) flexibel ist und das Stützelement (1) aus mindestens drei in einer Reihe montierten verschiebbaren Segmenten (6) besteht, jedes von denen mit einem geeigneten Federlager ausgestattet ist, das gegenüber dem Arbeitsendstück des Elements (1) angeordnet ist.

6. Scanner zum Testen von Magnetbändern nach Anspruch 5, wobei die Federlager Druckfedern (7) sind, jede von denen mit einer geeigneten Druckeinstelleinrichtung (8) ausgestattet ist.

7.  Scanner zum Testen von Magnetbändern nach Anspruch 1, wobei die Impulsstromquelle (4) mit einer Schaltung zur Erregung von Wirbelströmen ausgestattet ist, die umfaßt:

einen Eingangs-Erregungsspannungswandler (10) mit einem Leistungseingang, der mit geeigneten Mitteln zur Verbindung mit einer externen oder einer eingebauten Stromquelle, einem Leistungsschalter (11) und einem Leistungsausgang ausgestattet ist;
einen Erregungsspannungsregler (12), der einen mit dem Leistungsausgang des Eingangserregungsspannungswandlers (10) verbundenen Leistungseingang, einen Steuereingang, einen Steuerausgang und einen Leistungsausgang aufweist, und der mit einer Einstelleinrichtung (13) der Erregerspannung, die mit dem erwähnten Steuereingang verbunden ist;
einen Taktimpulsgenerator (14), der einen Steuereingang, der mit dem Steuerausgang des Erregungsspannungsreglers (12) verbunden ist und einem Steuerausgang aufweist;
eine programmierbare Steuerung (15) von Taktdauer und Taktperiode, die einen Steuereingang aufweist, der mit dem Steuerausgang des genannten Taktimpulsgenerators (14) verbunden ist, einen Stromeingang aufweist, der mit dem Stromausgang des genannten Erregerspannungsreglers (12) verbunden ist und einen Steuerausgang aufweist, und der mit einer Einstellvorrichtung (16) von Taktdauer und Taktperiode ausgestattet ist, die mit dem erwähnten Steuereingang verbunden ist;
mindestens einstufiger Verstärker des Ausgangspulsstromes, der einen ersten Steuereingang, der mit dem Steuerausgang der programmierbaren Steuerung (15) verbunden ist und einen zweiten Steuereingang aufweist, wobei ein Leistungseingang mit dem Leistungsausgang des Erregungsspannungsreglers (12) verbunden ist und eine Ausgangsleistung, die zur Verbindung des Erregungsleiters (2) des Induktors für Wirbelströme bestimmt ist, und die mit einer Einstellvorrichtung (17) für die Impulsanstiegsrate ausgestattet ist, die mit dem zweiten Steuereingang verbunden ist.

8.  Scanner zum Testen von Magnetbändern nach Anspruch 7, wobei der Verstärker des Ausgangsstrompulses zwei Verstärkerstufen aufweist und aus einem Vorverstärker (18) und einem Endverstärker (19) besteht, die parallel zu dem Leistungsausgang des Erregerspannungsreglers (12) und in Reihe zu dem Steuerausgang der programmierbaren Steuerung (15) von Taktdauer und Taktperiode, an dem der Erregungsleiter (2) des Induktors für Wirbelströme mit dem Leistungsausgang des Endverstärkers (19) verbunden ist.

9.  Scanner zum Testen von Magnetbändern nach Anspruch 7, wobei die Impulsstromquelle (4) zusätzlich mit einem Programmer (23) ausgestattet ist, der zur Stromversorgung mit dem Leistungsausgang des Erregungsspannungsreglers (12) verbunden ist und zum Einstellen mit der programmierbaren Steuerung (15) von Taktdauer und Taktperiode verbunden ist.

10. Scanner zum Testen von Magnetbändern nach Anspruch 7, wobei die Impulsstromquelle (4) des Impulsstroms mit einer Diagnoseschnittstelle (24) ausgestattet ist, die zur Überprüfung des Betriebs von mindestens dem Erregungsspannungsregler (12) und der programmierbaren Steuerung (15) von Taktdauer und Taktperiode dient.

11. Scanner zum Testen von Magnetbändern nach Anspruch 7, wobei die Impulsstromquelle (4) des Impulsstroms mit einer solchen Schaltung einer aktiven steuerbaren magnetischen Vorspannung des Magnetbandes während der Aufnahme ausgestattet ist, die umfaßt:

einen Regler (20) der Vormagnetisierungsspannung, der einen Leistungseingang aufweist, der mit dem Leistungsausgang des EingangsErregungsspannungswandlers (10) verbunden ist, einen Leistungsausgang und einen Steuereingang aufweist, und der mit einer Einstellvorrichtung (21) der magnetischen Vormagnetisierungsspannung ausgestattet ist, die mit dem erwähnten Steuereingang verbunden ist, und
mindestens einstufiger Verstärker (22) eines magnetischen Vorspannungssignals, das mit dem Leistungsausgang des Reglers (20) der magnetischen Vorspannung, mit der programmierbaren Steuerung (15) und mit dem Erregungsleiter (2) des Induktors für Wirbelströme als zusätzliche Stromquelle verbunden ist.

**Revendications**

1.  Un scanner pour un testeur de bande magnétique, comprenant :

un corps rigide (9),
un inducteur de courant de Foucault, qui est solidairement assemblé avec ledit corps (9) et qui est constitué d'un élément de support (1) diélectrique non ferromagnétique comportant une rainure longitudinale à son extrémité fonctionnelle et un conducteur (2) d'excitation qui est conformé en segment de fil et qui est placé à l'intérieur de ladite rainure dudit élément de support (1),
une source (4) de courant impulsionnel montée sur ledit corps (9), et
un moyen adapté (3) pour connecter ledit conducteur (2) dudit inducteur de courant de Foucault à ladite source (4) de courant impulsionnel.

2. Scanner pour un testeur de bande magnétique selon la revendication 1, dans lequel ledit élément de support (1) est formé d'une plaque monobloc, et dans lequel le conducteur (2) d'excitation repose sur le fond de ladite rainure à travers une entretoise de soutien (5) en matériau élastique diélectrique.

3. Scanner pour un testeur de bande magnétique selon la revendication 1, dans lequel ledit élément de support (1) est formé d'une plaque monobloc réalisée à partir d'un matériau polymère élastique.

4. Scanner pour un testeur de bande magnétique selon la revendication 1, dans lequel ledit conducteur (2) est flexible, et dans lequel ledit élément de support (1) est conformé en un compartiment à l'intérieur duquel au moins seulement une paroi inférieure ménage une entretoise élastique de soutien (5) et qui est rempli, en position de fonctionnement, avec une solution visqueuse.

5. Scanner pour un testeur de bande magnétique selon la revendication 1, dans lequel ledit conducteur (2) est flexible, et dans lequel ledit élément de support (1) est constitué d'au moins trois segments (6) montés coulissant dans une rangée, chacun d'eux étant équipé d'un ressort de soutien approprié qui est situé à l'opposé de l'extrémité fonctionnelle de l'élément (1).

6. Scanner pour un testeur de bande magnétique selon la revendication 5, dans lequel lesdits ressorts de soutien sont des ressorts (7) de compression, chacun d'eux étant équipé d'un organe de réglage (8) de l'effort de compression adapté.

7. Scanner pour un testeur de bande magnétique selon la revendication 1, dans lequel ladite source (4) de courant impulsionnel est équipée d'un circuit d'excitation du courant de Foucault qui est constitué de :

un transducteur (10) de tension d'excitation d'entrée pourvu d'une entrée de puissance équipée de moyens adaptés pour une connexion à une source d'alimentation externe ou à une source d'alimentation intégrée, un interrupteur d'alimentation (11) et une sortie de puissance,
un régulateur (12) de tension d'excitation, ayant une entrée de puissance connectée à la sortie de puissance du transducteur (10) de tension d'excitation d'entrée, une entrée de commande, une sortie de contrôle et une sortie de puissance, et étant équipé d'un dispositif de réglage (13) de la tension d'excitation qui est connecté à ladite entrée de commande,
un générateur (14) chronométrique d'impulsions, ayant une entrée de commande connectée à la sortie de contrôle du régulateur (12) de tension d'excitation et une sortie de contrôle,
un contrôleur programmable (15) de durée d'impulsion et de période d'impulsion, qui a une entrée de commande connectée à la sortie de contrôle dudit générateur (14) chronométrique d'impulsions, une entrée de puissance connectée à la sortie de puissance dudit régulateur (12) de tension d'excitation (12) et une sortie de contrôle, et qui est équipé d'un dispositif de réglage (16) de durée d'impulsion et de période d'impulsion qui est connecté à ladite entrée de commande,
au moins un amplificateur à simple étage du courant impulsionnel de sortie, qui comporte une première entrée de commande connectée avec la sortie de contrôle dudit contrôleur programmable (15) et une seconde entrée de commande, une entrée de puissance reliée à la sortie de puissance dudit régulateur (12) de tension d'excitation et une sortie de puissance réservée à la connexion du conducteur (2) d'excitation de l'inducteur de courant de Foucault, et qui est équipé d'un dispositif de réglage (17) du taux de montée d'impulsion qui est connecté à ladite seconde entrée de commande.

8. Scanner pour un testeur de bande magnétique selon la revendication 7, dans lequel l'amplificateur du courant impulsionnel de sortie comporte deux étages d'amplification et est composé d'un préamplificateur (18) et d'un amplificateur terminal (19), qui sont connectés en parallèle avec la sortie de puissance du régulateur (12) de tension d'excitation et en série avec la sortie de contrôle dudit contrôleur (15) programmable de durée d'impulsion et de période d'impulsion, à laquelle le conducteur (2) d'excitation de l'inducteur de courant de Foucault est connecté en sortie de puissance de l'amplificateur terminal (19).

9. Scanner pour un testeur de bande magnétique selon la revendication 7, dans lequel ladite source (4) de courant impulsionnel est en outre équipée d'un programmeur (23) qui est connecté, pour la fourniture en puissance électrique, à la sortie de puissance du régulateur (12) de tension d'excitation et, pour procurer le réglage, audit contrôleur programmable de la durée d'impulsion et de la période d'impulsion.

10. Scanner pour un testeur de bande magnétique selon la revendication 7, dans lequel ladite source (4) de courant impulsionnel est équipée d'une interface de diagnostique (24) réservée à l'inspection du fonctionnement au moins du régulateur (12) de tension d'excitation et du contrôleur (15) programmable de la durée d'impulsion et de la période d'impulsion.

11. Scanner pour un testeur de bande magnétique selon la revendication 7, dans lequel ladite source (4) de courant impulsionnel est équipée d'un tel circuit contrôlable de polarisation magnétique de la bande magnétique pendant un enregistrement, qui est constitué de :

un régulateur (20) de tension de polarisation magnétique, qui a une entrée de puissance connectée à la sortie de puissance du transducteur (10) de tension d'excitation d'entrée, une sortie de puissance et une entrée de commande, et qui est équipé d'un dispositif de réglage (21) de la tension de polarisation magnétique qui est connecté avec ladite entrée de commande, et
au moins un amplificateur (22) à simple étage du signal de polarisation magnétique, qui est connecté à la sortie de puissance dudit régulateur (20) de tension de polarisation magnétique audit contrôleur (15) programmable et audit conducteur (2) d'excitation de l'inducteur de courant de Foucault comme une source de courant additionnelle.

Moving force

Pressing force

9

25

29

27

33

24

34

4

11

28

15

30

31

26

32

3

3

5

35

36

$I_{exc}(t)$

1

2

FIG 1.

Moving force

Pressing force

4 Source of pulse current $I_{exc}(t)$

$I_{exc}(t)$

9

1

3

5

35

$P_{sur}$

2

37

36

FIG 2.

Moving force

Pressing force

4  Source of pulse
current $I_{exc}(t)$

$I_{exc}(t)$

9

8

1

3

7

35

36

2

37

6

FIG 3.

| 11 Power switch (with an indicator) | ⟷ | 10 Input excitation voltage transducer | ← | ● Power input: External power source, or internal accumulator |

| 13 Setting device of excitation voltage | ⟷ | 12 Excitation voltage regulator |

14 Clock pulse generator

| 16 Setting device of pulse duration and pulse period | ⟷ | 15 Programmable controller of pulse duration and pulse period | ⟷ | 23 Programmer of controller 15 |

24 Diagnostic interface

| 17 Setting device of rate of pulse rise | ⟷ | 18 Preamplifier of excitation current pulses | ← |

19 Final amplifier of output excitation current pulses

Exciting conductor 2 of the inductor of eddy currents ●→ Power output: variable magnetic field $H_{exc}(t)$ excited in the studied electroconducive article

22 Amplifier of magnetic biasing signal

| 21 Setting device of magnetic biasing voltage | ⟷ | 20 Regulator of magnetic biasing voltage |

FIG 4.

FIG 5.

FIG 6.

FIG 7.

FIG 8.

FIG.9

FIG.10

FIG.11

FIG.12

FIG.13

FIG.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3534258 A
- SU 697905
- JP 58461 A
- US 4625167 A
- US 4695796 A

- US 4755752 A
- RU 2159426
- RU 2165079
- US 5754044 A
- US 5648720 A

### Non-patent literature cited in the description

- Mashinostroyeniye. Handbook. Publishing House, 1976, 56-63
- **JACK BLITZ.** Electrical and magnetic methods of nondestructive testing. CRC Press, 1991, 65-67
- *MATERIAL EVALUATION,* December 1993, 1402-1407

- **Y. FAN ; Y. DENG ; Z. ZENG ; L. UDPA ; W. SHIH ; G. FITZPATRICK.** Aging Aircraft Rivet Site Inspection Using Magneto-Optic Imaging: Automation and Realtime Image Processing. *Presented at 9th Joint FAA/DoD/NASA Aging Aircraft Conference,* 06 March 2006